# EUROPÄISCHE PATENTSCHRIFT

(11) **EP 3 163 257 B1**
(45) Veröffentlichungstag und Bekanntmachung des Hinweises auf die Patenterteilung: **26.09.2018**
(21) Anmeldenummer: 16195537.2
(22) Anmeldetag: 25.10.2016
(51) Int. Cl.: G01D 5/14, G01D 5/20

(54) **POSITIONSERFASSUNGSVORRICHTUNG**
POSITION DETECTION DEVICE
DISPOSITIF POUR DÉTECTER LA POSITION

(30) Priorität: 02.11.2015 DE 102015221428
(43) Veröffentlichungstag der Anmeldung: 03.05.2017
(73) Patentinhaber: Hahn-Schickard-Gesellschaft für angewandte Forschung e.V., 78052 Villingen-Schwenningen (DE)
(72) Erfinder: MINTENBECK, Dieter, 78052 VS-Rietheim (DE); FOLKMER, Bernd, 78462 Konstanz (DE); HEHN, Thorsten, 79232 March (DE); KUDERER, Markus, 79199 Kirchzarten (DE); GÖPPERT, Jacob, 79110 Freiburg (DE); KUHN, Frank, 82229 Seefeld (DE)
(74) Vertreter: Stöckeler, Ferdinand

(56) Entgegenhaltungen:
- EP-A1- 2 072 961
- EP-A1- 2 072 963
- WO-A1-2013/164361
- DE-A1- 10 013 525
- DE-A1-102005 015 948

## Beschreibung

Die Erfindung betrifft eine Positionserfassungsvorrichtung mit den Merkmalen von Anspruch 1, ein Positionserfassungssystem mit den Merkmalen von Anspruch 9, einen Zylinder mit einem Positionserfassungssystem mit den Merkmalen von Anspruch 14 sowie ein Verfahren zum Erfassen einer Position eines Magneten mit den Merkmalen von Anspruch 15.

Positionserfassungsvorrichtungen dienen dazu, eine Position eines Gegenstandes zu erfassen, um diesen lokalisieren zu können. Als eine Ausführung von Positionserfassungsvorrichtungen sind magnetische Positionserfassungsvorrichtungen bekannt, die die Position eines Magneten erfassen, um diesen lokalisieren zu können. Zur Positionserfassung des Magneten werden Magnetsensoren eingesetzt.

Es hat sich herausgestellt, dass magnetoresistive Sensoren, die auch als MR-Sensoren bezeichnet werden, hierfür gut geeignet sind. Diese Sensoren machen sich den magnetoresistiven Effekt zu Nutze, gemäß dem sich der elektrische Widerstand eines Materials beim Anlegen eines Magnetfeldes ändert. Hierbei kommen häufig anisotrope magnetoresistive Sensoren, sogenannte AMR-Sensoren, zum Einsatz, da diese kostengünstig herstellbar sind und trotzdem eine hohe Sensitivität aufweisen.

Beispielsweise ist in der WO 2013 / 164 361 A1 ein Multiturn-Drehgeber beschrieben, der mittels eines derartigen magnetoresistiven Sensors die Umdrehungen eines Magnets messen kann. Damit kann beispielsweise ein fein aufgelöster Drehwinkel einer sich drehenden Welle bestimmt werden, an welcher der Magnet angeordnet ist. Der Multiturn-Drehgeber kann dabei energieautark arbeiten, indem ein Impulsdrahtsensor zur Energieerzeugung verwendet wird.

Die EP 2 072 961 A1 beschreibt einen Hydraulikzylinder, der ebenfalls energieautark betrieben werden kann. Hierfür ist am Zylinder eine Spule angeordnet. In der Spule ist ein sich frei beweglicher Magnet angeordnet. Außerdem ist am Kolben ein Permanentmagnet angeordnet. Bei einer Bewegung des am Kolben angeordneten Permanentmagneten nimmt dieser den in der Spule angeordneten frei beweglichen Magneten mit, der dann wiederum eine Induktionsspannung in der Spule erzeugt.

Diese magnetoresistiven Sensoren weisen aber auch ungewünschte Effekte, wie Hysterese, Nichtlinearitäten und einen eingeschränkten Messbereich auf. Insbesondere für magnetische Felder, die größer sind als etwa die Hälfte des halben Messbereichs, nehmen die Hysterese sowie die Nichtlinearitäten schnell zu. Als Folge sind Messungenauigkeiten zu verzeichnen, deren Kompensation für hochauflösende Messungen erforderlich ist.

Um dieses Problem zu lösen, sind Ansätze bekannt, die es ermöglichen, den Sensor in seinem optimalen linearen Arbeitsbereich zu halten. So werden beispielsweise in [1] und [2] Konzepte beschrieben, bei denen der Sensor in einen Regelkreis integriert wird. Der Regelkreis ist ein closed-loop feedback Regelkreis, bei dem das Ausgangssignal des Sensors wieder an den Eingang zurückgeführt und von dem Eingangssignal subtrahiert wird. Da das Eingangssignal einen Wert einer magnetischen Feldstärke ist, muss das als Spannungssignal vorliegende Ausgangssignal des Sensors entsprechend gewandelt werden. Hierfür wird eine Spule in den Rückkoppelpfad integriert. Diese Spule wird auch als Rückkoppelspule bezeichnet.

Diese Rückkoppelspule wird, gemäß dem Wert des Ausgangssignals, bestromt und erzeugt ein der Stromstärke entsprechend starkes Magnetfeld. Dieses Magnetfeld ist dem externen Magnetfeld entgegengesetzt gerichtet, so dass dieses externe Magnetfeld am Sensor kompensiert werden kann. Der Sensor kann somit stets um seinen Nullpunkt herum, d.h. im Bereich seiner linearen Übertragungsfunktion, betrieben werden.

Die Rückkoppelspule benötigt jedoch Bauraum, der in den heutzutage in der Regel in miniaturiserter Form vorliegenden MR-Sensoren, nur begrenzt verfügbar ist. Wie beispielweise [2] zu entnehmen ist, sollte die Rückkoppelspule für eine effiziente Erzeugung des Magnetfelds eine hohe Windungszahl über der Überschneidungsfläche mit dem Sensor aufweisen. Dieser Ansatz resultiert jedoch in einem hohen Spulenwiderstand, so dass eine hohe Spannung benötigt wird, um einen Strom im Leiter zu generieren. Des Weiteren verschlechtert sich das Verhältnis zwischen Leiterbreite und Leiterabstand. Bezogen auf die Überschneidungsfläche mit dem Sensor führt dies zu einem geringeren Rückkoppelkoeffizienten.

Im Resultat wurde in [2] ein Sensorelement gefertigt, das aus sechs einzelnen Sensoren besteht, um eine ausreichend große Fläche zur Unterbringung der Rückkoppelspule zu gewährleisten. Allerdings wurde für die eigentliche Sensorik-Funktion von diesen sechs Sensoren lediglich ein einziger Sensor genutzt bzw. benötigt.

In den bekannten Lösungen wird für die Unterbringung einer geeigneten Rückkoppelspule viel Platz benötigt. Hinzu kommt eine Energieversorgung, wie beispielsweise eine Batterie, um den MR-Sensor mit Energie zu versorgen. Die Energieversorgung benötigt zusätzlichen Bauraum, so dass bekannte Positionserfassungsvorrichtungen, die die Position eines Magneten mittels des magnetoresistiven Effekts erfassen, einen verhältnismäßig großen Formfaktor aufweisen.

Es ist demnach eine Aufgabe der vorliegenden Erfindung, bekannte Positionserfassungsvorrichtungen dahingehend zu verbessern, dass diese einfach und kostengünstig herstellbar sind, dabei gleichzeitig eine geringe Baugröße aufweisen und darüber hinaus geeignet sind, um die oben beschriebenen unerwünschten Effekte bekannter Vorrichtungen zu kompensieren.

Diese Aufgabe wird erfindungsgemäß durch eine Positionserfassungsvorrichtung mit den Merkmalen von Anspruch 1 gelöst.

Die erfindungsgemäße Positionserfassungsvorrichtung ist ausgebildet, um die Position eines Magneten zu erfassen. Hierfür weist die Positionserfassungsvorrichtung ein Sensormodul auf, das ein Sensorausgangssignal ausgibt, welches von der Position des Magneten abhängt. Die erfindungsgemäße Positionserfassungsvorrichtung weist außerdem ein Energy-Harvester-Modul auf, welches wiederum die zum Betreiben des Sensormoduls benötigte Energie liefert. Als Energy-Harvester werden im allgemeinen Sprachgebrauch Vorrichtungen bezeichnet, die kleine Mengen an zur Verfügung stehender Energie, z.B. in Form von Wärme- oder Bewegungsenergie, in elektrische Energie wandeln. Die erfindungsgemäße Positionserfassungsvorrichtung weist ferner eine Spule auf. Wenn sich der Magnet relativ zu dieser Spule bewegt, wird eine Spannung in der Spule induziert. Die Spule ist ausgebildet, um diese induzierte Spannung für das Energy-Harvester-Modul zu liefern. Das Energy-Harvester-Modul kann diese bereitgestellte induzierte Wechselspannung dann gegebenenfalls in eine Gleichspannung umrichten und diese bei Bedarf auf ein nutzbares Niveau regeln. Das Energy-Harvester-Modul kann diese elektrische Energie dann wiederum dem Sensormodul bereitstellen, um so die Position des Magneten zu erfassen. Durch die Bereitstellung des Energy-Harvester-Moduls, das mittels der vorhandenen Spule eine elektrische Energie zum Betreiben des Sensormoduls liefern kann, kann auf eine externe Energiequelle, wie z.B. eine Batterie und dergleichen, verzichtet werden. Der Formfaktor der erfindungsgemäßen Positionserfassungsvorrichtung kann somit gegenüber bekannten Positionserfassungsvorrichtungen verkleinert werden. Die Spule ist außerdem ausgebildet, um von dem Sensormodul mit einem Strom beaufschlagt zu werden, der ein Magnetfeld erzeugt, das dem von dem Magneten bewirkten Magnetfeld entgegengesetzt gerichtet ist. In anderen Worten kann die Spule, die zur Energieerzeugung verwendet wird, gleichsam als Rückkoppelspule verwendet werden. Somit können die vorteilhaften Funktionen rückgekoppelter MR-Sensoren genutzt werden, ohne eine separate Rückkoppelspule hierfür bereitstellen zu müssen. Da auf eine separate Rückkoppelspule verzichtet werden kann, kann der Formfaktor der erfindungsgemäßen Positionserfassungsvorrichtung gegenüber bekannten Positionserfassungsvorrichtungen weiter reduziert werden. Mit der vorliegenden Erfindung wird also eine verbesserte Positionserfassungsvorrichtung vorgeschlagen, die einfach und kostengünstig herstellbar, und dabei gleichzeitig platzsparend anordenbar ist.

Gemäß einer Ausführungsform weist das Sensormodul einen magnetoresistiven Sensor, insbesondere einen anisotropen magnetoresistiven AMR-Sensor, auf, der ausgebildet ist, um den Betrag und/oder die Richtung des von dem Magneten bewirkten Magnetfelds zu bestimmen. Der elektrische Widerstand des MR-Sensors hängt von Betrag und Richtung des von dem Magneten bewirkten Magnetfelds ab. Die Empfindlichkeit des MR-Sensors liegt etwa um den Faktor 50 höher als bei herkömmlichen Messverfahren, wie z. B. dem Halleffekt. Dadurch erübrigen sich Elemente zur Magnetfeldkonzentration und Magnetfeldführung in Form von Ferrit- oder zum Teil auch schweren Eisenkernen. Insbesondere AMR-Sensoren sind günstig sowie in kleinen Formfaktoren herstellbar und somit zur Verwendung in der erfindungsgemäßen Positionserfassungsvorrichtung gut geeignet.

In einer weiteren Ausführungsform ist die Spule konfiguriert, um eine mittels einer Bewegung des Magneten induzierte Spannung für das Energy-Harvester-Modul zu liefern. Gleichzeitig ist das Sensormodul mit einer weiteren Spule gekoppelt. Das Sensormodul steuert diese weitere Spule, in Abhängigkeit von einem Sensorausgangssignal, derart an, dass die weitere Spule ein Magnetfeld erzeugt, das dem von dem Magneten erzeugten Magnetfeld entgegengesetzt gerichtet ist. In anderen Worten kann, anstatt der Spule, die zur Energieerzeugung mittels Induktion genutzt wird, eine zweite Spule als Rückkoppelspule verwendet werden. Dies bietet eine Möglichkeit zur Bereitstellung einer Redundanz, so dass bei Defekt der Induktionsspule trotzdem weiterhin eine Rückkoppelspule vorhanden ist. Diese zweite, als Rückkoppelspule genutzte, Spule kann Wicklungen aufweisen, die sich beispielsweise mit Wicklungen der Induktionsspule abwechseln. Die Wicklungen der Induktionsspule sowie die Wicklungen der Rückkoppelspule können auch schichtweise übereinander angeordnet sein. In beiden Fällen wird, im Vergleich zu zwei örtlich voneinander getrennt angeordneten separaten Spulen, der benötigte Bauraum gering gehalten.

Es ist denkbar, dass die Positionserfassungsvorrichtung eine Schaltvorrichtung aufweist, mittels derer die Spule wahlweise mit dem Energy-Harvester-Modul oder mit dem Sensormodul koppelbar ist. Wenn also beispielsweise die Spule sowohl als Induktionsspule, als auch als Rückkoppelspule genutzt werden soll, dann kann diese Spule, je nach Bedarf, mittels der Schaltvorrichtung entweder mit dem Energy-Harvester-Modul oder mit dem Sensormodul gekoppelt werden. Im ersten Fall funktioniert die Spule als Induktionsspule. Im zweiten Fall funktioniert dieselbe Spule als Rückkoppelspule.

Gemäß einer Ausführungsform kann die Schaltvorrichtung ausgebildet sein, um die Spule während einer ersten Phase mit dem Energy-Harvester-Modul und während einer zweiten Phase mit dem Sensormodul zu koppeln. Die Schaltvorrichtung kann die Spule also zeitgesteuert zwischen dem Energy-Harvester-Modul und dem Sensormodul hin- und herschalten. Dabei kann es sich um ein Zeitmultiplex-Verfahren handeln, bei dem die Spule in einem ersten Zeitabschnitt mit dem Energy-Harvester-Modul, und in einem zweiten Zeitabschnitt mit dem Sensormodul gekoppelt wird. Der Zeitabschnitt während dem die Spule als Induktionsspule genutzt wird, kann größer sein als der Zeitabschnitt während dem die Spule als Rückkoppelspule genutzt wird. Der Zeitabschnitt während dem die Spule als Rückkoppelspule genutzt wird, kann beispielsweise im Bereich von Mikrosekunden liegen.

Gemäß einer weiteren Ausführungsform kann die Positionserfassungsvorrichtung ein Spannungswandlermodul aufweisen, das ausgebildet ist, um eine erste von der Spule erzeugte Eingangsspannung, die geringer ist als eine zweite Spannung, auf die das Energy-Harvester-Modul anspricht, in eine höhere Ausgangsspannung zu wandeln und das Sensormodul und/oder das Energy-Harvester-Modul mit dieser Ausgangsspannung zu versorgen. Sowohl das Energy-Harvester-Modul als auch das Sensormodul weisen eine Schwell-Einsatzspannung auf, ab der das jeweilige Modul anspricht und betriebsfähig ist. Je nach Stärke des von dem bewegbaren Magneten ausgehenden Magnetfelds, bzw. abhängig vom Abstand des Magneten zu der Spule, kann die induzierte Wechselspannung nicht ausreichen, um das Energy-Harvester-Modul bzw. das Sensormodul zu betreiben. Das Spannungswandlermodul setzt daher diese geringe Induktionsspannung (Eingangsspannung) in eine höhere Ausgangsspannung um. Diese Ausgangsspannung ist höher als die Schwell-Einsatzspannung, ab der das jeweilige Modul anspricht und betriebsfähig ist. Das Energy-Harvester-Modul sowie das Sensormodul können ihre Funktion somit bereits frühzeitiger zur Verfügung stellen als ohne Spannungswandlermodul. Dies führt zu einem früheren Ansprechen der Module sowie zu einer höheren Genauigkeit bei der Positionserfassung.

Es ist vorstellbar, dass die Positionserfassungsvorrichtung auf oder in einer Folie angeordnet ist. Eine Ausgestaltung der Positionserfassungsvorrichtung in Folienform ermöglicht flexible Einsatzbereiche. So kann eine in Folientechnik hergestellte Positionserfassungsvorrichtung beispielsweise auf gekrümmten Flächen angebracht werden. Die Folientechnik erlaubt außerdem eine platzsparende Anordnungsmöglichkeit, da die Folie im Vergleich zu herkömmlichen Substraten sehr dünn ist. Auf der Folie kann außerdem eine Klebeschicht vorgesehen sein, so dass eine in Folientechnik hergestellte Positionserfassungsvorrichtung einfach auf eine Oberfläche aufklebbar ist.

Es ist denkbar, ein Positionserfassungssystem mit mehreren der zuvor beschriebenen Positionserfassungsvorrichtungen bereitzustellen, wobei die mehreren Positionserfassungsvorrichtungen nebeneinander auf einem gemeinsamen Träger angeordnet sind und eine gemeinsame Energieleitung und/oder eine gemeinsame Datenleitung aufweisen. Unter mehreren Positionserfassungsvorrichtungen sind mindestens zwei, und vorzugsweise drei oder mehr, Positionserfassungsvorrichtungen zu verstehen. Der gemeinsame Träger kann vorzugsweise als Folie ausgestaltet sein. Durch Aneinanderreihung mehrerer Positionserfassungsvorrichtungen zu einem Positionserfassungssystem ist eine effiziente Fertigung in einem Roll-to-Roll Produktionsverfahren möglich. Der gemeinsame Träger kann an beliebigen Stellen zwischen zwei benachbarten Positionserfassungsvorrichtungen getrennt werden, um so ein Positionserfassungssystem beliebiger Länge bereitzustellen. Mit der gemeinsamen Energieleitung ergibt sich außerdem der Vorteil, dass Energie, die in der Spule einer ersten Positionserfassungsvorrichtung erzeugt wurde, auch von einer zweiten Positionserfassungsvorrichtung genutzt werden kann. An der gemeinsamen Energieversorgungsleitung kann ein Energiespeicher vorgesehen sein, der überschüssige bzw. zu viel produzierte Energie zwischenspeichert. Die Positionserfassungsvorrichtungen können sich dann bei Bedarf mit Energie aus dem Energiespeicher versorgen.

Gemäß einer Ausführungsform des Positionserfassungssystems erstreckt sich der gemeinsame Träger entlang des Bewegungswegs des Magneten. Durch Auswahl bzw. Ablängen einer gewünschten Anzahl von Positionserfassungsvorrichtungen kann das Positionserfassungssystem entsprechend der Länge des von dem Magneten zurücklegbaren Bewegungswegs bereitgestellt werden.

Gemäß einer weiteren Ausführungsform des Positionserfassungssystems weist dieses eine Steuervorrichtung auf, die mit allen Positionserfassungsvorrichtungen verbunden ist und ausgebildet ist, um von jedem Sensormodul ein Positionssignal empfangen zu können und, basierend auf den empfangenen Sensorsignalen, eine Position des Magneten zu bestimmen. Die Steuervorrichtung steuert bzw. koordiniert sozusagen die Kommunikation der einzelnen Positionserfassungsvorrichtungen innerhalb eines Positionserfassungssystems untereinander. Hierfür kann die Steuervorrichtung zwar prinzipiell von jedem Sensormodul ein Positionssignal empfangen. Wenn der Magnet allerdings zu weit von einer bestimmten Positionserfassungsvorrichtung entfernt ist, um den magnetoresistiven Effekt dort hervorzurufen, wird diese Positionserfassungsvorrichtung kein Positionssignal an die Steuervorrichtung liefern können. Die Steuervorrichtung ist somit also ausgebildet, um von jedem Sensormodul ein Positionssignal theoretisch empfangen zu können. Die Steuervorrichtung wertet die empfangenen Signale, beispielsweise anhand eines Signalstärke-Vergleichs, aus und kann hierüber auf die Position des Magneten schließen.

Es ist vorstellbar, dass die Steuervorrichtung ausgebildet ist, um basierend auf der ermittelten Aufenthaltsposition des Magneten, von dieser Aufenthaltsposition entfernte Positionserfassungsvorrichtungen selektiv von der gemeinsamen Energieleitung zu trennen. Es können also Positionsvorrichtungen, die so weit von dem Magneten entfernt sind, dass kein nutzbarer magnetoresistiver Effekt auftritt, selektiv abgeschaltet werden. So kann vermieden werden, dass Verbraucher von derartigen Positionsvorrichtungen unnötig Energie von der gemeinsamen Energieleitung abziehen.

Gemäß einer weiteren Ausführungsform des Positionserfassungssystems ist die Steuervorrichtung ausgebildet, um mittels des Signalverlaufs eines Sensormoduls einer Positionserfassungsvorrichtung die Bewegungsrichtung des Magneten zu erfassen und, basierend auf der Bewegungsrichtung, von dieser Aufenthaltsposition entfernte Positionserfassungsvorrichtungen, mit Ausnahme der in Bewegungsrichtung unmittelbar benachbart angeordneten Positionserfassungsvorrichtung, selektiv von der gemeinsamen Energieleitung zu trennen. Die Steuervorrichtung erkennt sozusagen die Bewegungsrichtung des Magneten anhand einer Auswertung des Signalverlaufs der einzelnen Sensormodule. Wenn sich also der Magnet beispielweise an einer n-ten Positionserfassungsvorrichtung vorbei bewegt, wird das Sensormodul dieser n-ten Positionserfassungsvorrichtung das stärkste Signal liefern. Wenn sich der Magnet weiter bewegt, wird die in Bewegungsrichtung des Magneten nachfolgende Positionserfassungsvorrichtung n+1 das stärkste Signal liefern, sobald der Magnet die Positionserfassungsvorrichtung n+1 passiert. Über einen solchen zeitlichen Signalverlauf kann die Steuervorrichtung die Bewegungsrichtung des Magneten schätzen. Die Steuervorrichtung kann somit beispielsweise eine Positionserfassungsvorrichtung, die bereits von dem Magneten passiert wurde, selektiv abschalten, selbst wenn diese unmittelbar benachbart zu der Positionserfassungsvorrichtung, die der Magnet gerade passiert, angeordnet ist. In anderen Worten, wenn der Magnet gerade die n-te Positionserfassungsvorrichtung passiert, kann die unmittelbar zuvor passierte Positionserfassungsvorrichtung n-1 von der gemeinsamen Energieversorgungsleitung getrennt werden, obwohl die Positionserfassungsvorrichtung n-1 unmittelbar benachbart zu der aktuell aktiven n-ten Positionserfassungsvorrichtung angeordnet ist.

Eine weitere Ausführungsform der Erfindung betrifft einen Zylinder mit einem zuvor beschriebenen Positionserfassungssystem, wobei der Zylinder einen bewegbaren Kolben aufweist, und der Magnet an dem Kolben angeordnet ist, und wobei das Positionserfassungssystem an dem Zylinder entlang der Bewegungsrichtung des Kolbens angeordnet ist. Somit kann die Position des Kolbens innerhalb des Zylinders erfasst, so wie der zurückgelegte Weg des Kolbens innerhalb des Zylinders gemessen werden. Ein möglicher einfacher Aufbau wäre beispielsweise ein langgestreckter Zylinder, in dem sich ein Kolben linear entlang der Erstreckungsrichtung des Zylinders bewegt. In diesem Fall wäre das Positionserfassungssystem linear entlang der linearen Bewegungsrichtung des Magneten angeordnet. Denkbar ist aber auch ein Zylinder, in dem sich der Kolben rotatorisch um den Mittelpunkt des Zylinders bewegt. In diesem Fall wäre das Positionserfassungssystem beispielsweise lateral um den Zylinder herum, d.h. entlang des Zylinderumfangs, angeordnet.

Ausführungsbeispiele der Erfindung sind in der Zeichnung dargestellt und werden nachstehend erläutert. Es zeigen:
- Fig. 1: ein Blockschaltbild einer erfindungsgemäßen Positionserfassungsvorrichtung,
- Fig. 2: ein Blockschaltbild einer weiteren Ausführungsform einer erfindungsgemäßen Positionserfassungsvorrichtung,
- Fig. 3: ein Blockschaltbild einer weiteren Ausführungsform einer erfindungsgemäßen Positionserfassungsvorrichtung,
- Fig. 4: ein Blockschaltbild eines Regelkreises für ein Sensormodul zur Verwendung in einer erfindungsgemäßen Positionserfassungsvorrichtung,
- Fig. 5: ein Blockschaltbild eines alternativen Regelkreises für ein Sensormodul zur Verwendung in einer erfindungsgemäßen Positionserfassungsvorrichtung,
- Fig. 6: ein Blockschaltbild eines weiteren Regelkreises für ein Sensormodul zur Verwendung in einer erfindungsgemäßen Positionserfassungsvorrichtung,
- Fig. 7: ein Blockschaltbild eines weiteren Regelkreises für ein Sensormodul zur Verwendung in einer erfindungsgemäßen Positionserfassungsvorrichtung,
- Fig. 8: ein Blockschaltbild einer weiteren Ausführungsform einer erfindungsgemäßen Positionserfassungsvorrichtung,
- Fig. 9: ein Blockschaltbild einer Ausgestaltung eines Energy-Harvesting-Moduls zur Verwendung in einer erfindungsgemäßen Positionserfassungsvorrichtung,
- Fig. 10A: eine Ausführungsform eines Zylinders mit einem Positionserfassungssystem mit mehreren erfindungsgemäßen Positionserfassungsvorrichtungen,
- Fig. 10B: eine weitere Ausführungsform eines Zylinders mit einem Positionserfassungssystem mit mehreren erfindungsgemäßen Positionserfassungsvorrichtungen,
- Fig. 10C: eine weitere Ausführungsform eines Zylinders mit einem Positionserfassungssystem mit mehreren erfindungsgemäßen Positionserfassungsvorrichtungen, und
- Fig. 11: eine Ausführungsform eines Positionserfassungssystems mit mehreren erfindungsgemäßen Positionserfassungsvorrichtungen.

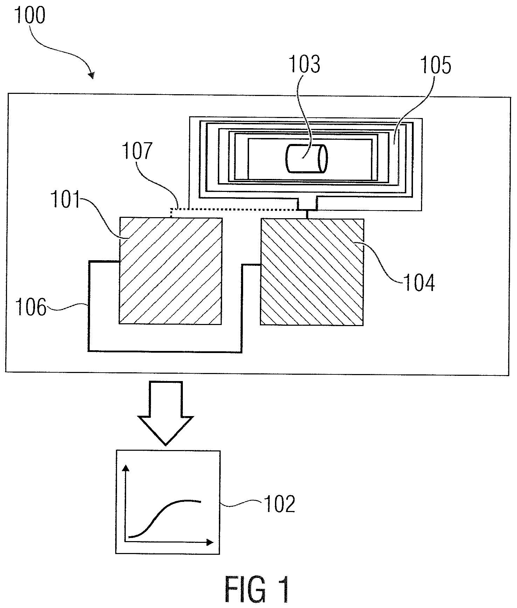

Figur 1 zeigt eine erfindungsgemäße Positionserfassungsvorrichtung 100. Die Positionserfassungsvorrichtung 101 ist ausgebildet, um die Position eines Magneten 103 zu erfassen. Die Positionserfassungsvorrichtung 100 weist ein Sensormodul 101 auf. Das Sensormodul 101 kann ein Sensorausgangssignal 102 ausgeben. Das Sensorausgangssignal 102 ist abhängig von der Position eines Magneten 103.

Die Positionserfassungsvorrichtung 100 weist ein Energy-Harvester-Modul 104 auf. Das Energy-Harvester-Modul 104 ist ausgebildet, um eine Energie für das Sensormodul 101 zu erzeugen. Das Energy-Harvester-Modul 104 und das Sensormodul 101 sind über eine Energieversorgungsleitung 106 miteinander verbunden. Hierüber kann das Energy-Harvester-Modul 104 die erzeugte Energie dem Sensormodul 101 bereitstellen.

Die Positionserfassungsvorrichtung 100 weist eine Spule 105 auf. Die Spule 105 ist konfiguriert, um eine Induktionsspannung für das Energy-Harvester-Modul 104 zu liefern. Die Induktionsspannung wird in der Spule mittels einer Bewegung des Magneten 103 relativ zu der Spule 105 induziert.

Zusätzlich ist die Spule 105 konfiguriert, um von dem Sensormodul 101 mit einem Strom beaufschlagt zu werden. Hierfür ist das Sensormodul 101 über eine Signalleitung 107 mit der Spule 105 verbunden.

Sofern die Spule 101 konfiguriert ist, um von dem Sensormodul 101 mit einem Strom beaufschlagt zu werden, erzeugt dieser Strom in der Spule ein Magnetfeld, das dem von dem Magneten 103 bewirkten Magnetfeld entgegengesetzt gerichtet ist.

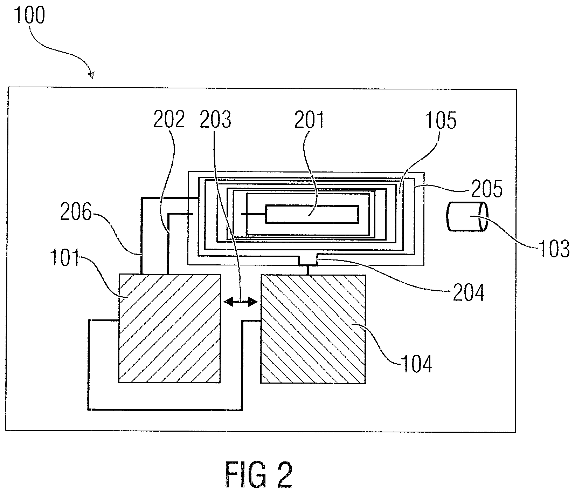

Figur 2 zeigt eine weitere Ausführungsform einer erfindungsgemäßen Positionserfassungsvorrichtung 100. Das Sensormodul 101 der Positionserfassungsvorrichtung 100 weist einen magnetoresistiven Sensor 201 auf. Der magnetoresistiven Sensor 201 ist in diesem Ausführungsbeispiel als ein anisotroper magnetoresistiver Sensor ausgebildet. Es können aber auch magnetoresistive Sensoren 201 verwendet werden, die den Effekt des magnetischen Tunnelwiderstands nutzen, d.h. sogenannte TMR-Sensoren, oder Riesenmagnetowiderstand-Sensoren, sogenannte GMR-Sensoren.

Der magnetoresistive Sensor 201 ist über eine Signalleitung 202 mit dem Sensormodul 101 verbunden. Das Sensormodul 101 ist außerdem über eine bidirektionale Signalleitung 203 mit dem Energy-Harvester-Modul 104 verbunden. Über diese bidirektionale Signalleitung 203 kann das Energy-Harvester-Modul 104 das Sensormodul 101 mit Energie versorgen. Andererseits kann das Sensormodul 101 die Spule 105 über das Energy-Harvester-Modul 104 mit Strom beaufschlagen, wobei der Strom durch das Energy-Harvester-Modul 104 hindurch und über die Signalleitung 203 in die Spule 105 hinein fließt.

Die in Figur 2 abgebildete Ausführungsform weist eine zweite Spule 205 auf. Die Wicklungen der zweiten Spule 205 sind abwechselnd zu den Wicklungen der Spule 105 angeordnet. Hierbei kann es sich beispielsweise um eine zweilagige Spule handeln, wobei die erste Lage den Wicklungen der ersten Spule 105, und die zweite Lage den Wicklungen der zweiten Spule 205 entspricht.

Das Sensormodul 101 ist mit der weiteren Spule 205 gekoppelt. Dabei kann die weitere Spule 205 entweder über eine Signalleitung 206 mit der weiteren Spule 205 gekoppelt sein, oder über das Energy-Harvester-Modul 104 mittels der bidirektionalen Signalleitung 203. Das Sensormodul 101 ist ausgebildet, um die weitere Spule 205, in Abhängigkeit von dem Sensorausgangssignal 102 (Figur 1), derart anzusteuern, dass die weitere Spule 205 ein Magnetfeld erzeugt, das dem von dem Magneten 103 erzeugten Magnetfeld entgegengesetzt gerichtet ist.

In anderen Worten kann die erste Spule 105 als Induktionsspule genutzt werden, die die durch die Relativbewegung des Magneten 103 induzierte Wechselspannung an das Energy-Harvester-Modul 104 liefert. Die zweite Spule 205 kann als Rückkoppelspule genutzt werden, die von dem Sensormodul 101 bestromt wird. In Abhängigkeit von der Stromstärke baut sich in der zweiten Spule 205 ein Magnetfeld auf, das dem von dem Magneten 103 ausgehenden Magnetfeld entgegengesetzt gerichtet ist. Das von der zweiten Spule 205 erzeugte Magnetfeld kann vorteilhafter Weise betragsgleich und entgegengesetzt zu dem von dem Magneten 103 ausgehenden Magnetfeld gerichtet sein, um dieses zu kompensieren und den magnetoresistiven Sensor 201 so im optimalen bzw. in dessen linearen Arbeitsbereich zu halten.

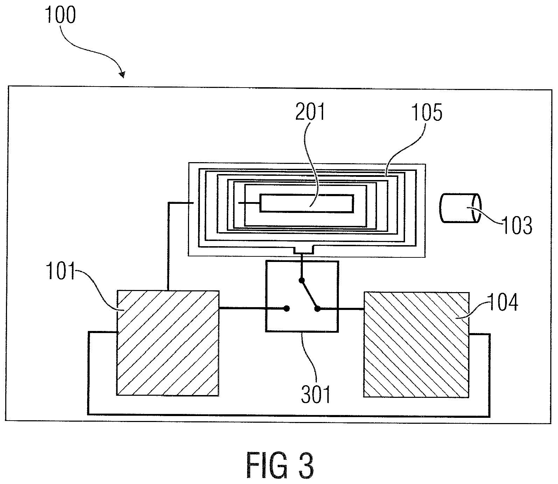

Figur 3 zeigt eine weitere Ausführungsform einer erfindungsgemäßen Positionserfassungsvorrichtung 100. Hier weist die Positionserfassungsvorrichtung 100 eine Schaltvorrichtung 301 auf. Die Schaltvorrichtung 301 ist ausgebildet, um die Spule 105 wahlweise mit dem Energy-Harvester-Modul 104 oder mit dem Sensormodul 101 zu koppeln.

Die Schaltvorrichtung 301 ist ausgebildet, um die Spule 105 in einer ersten Phase mit dem Energy-Harvester-Modul 104 und in einer zweiten Phase mit dem Sensormodul 101 zu koppeln. Die Schaltvorrichtung 301 wird sozusagen in einem Zeitmultiplex-Verfahren betrieben.

Während einer ersten Zeitspanne koppelt die Schaltvorrichtung 301 die Spule 105 mit dem Energy-Harvester-Modul 104. In dieser ersten Zeitspanne funktioniert die Spule 105 als Induktionsspule, wobei durch eine Relativbewegung zwischen dem Magneten 103 und der Spule 105 eine Wechselspannung in der Spule 105 induziert wird.

Während einer zweiten Zeitspanne koppelt die Schaltvorrichtung 301 die Spule 105 mit dem Sensormodul 101. In dieser Zeitspanne funktioniert die Spule 105 als Rückkoppelspule. Das Sensormodul 101 bestromt die Rückkoppelspule 105, so dass die Rückkoppelspule 105 ein Magnetfeld aufbaut, das dem von dem Magneten 103 ausgehenden Magnetfeld entgegengesetzt gerichtet ist.

Die Zeitschlitze, die für die erste Phase vorgesehen sind, können länger sein, als die Zeitschlitze, die für die zweite Phase vorgesehen sind. Beispielsweise kann ein Zeitschlitz, der für die erste Phase vorgesehen ist um einen Faktor zwischen 5 bis 10 länger sein, als ein Zeitschlitz, der für die zweite Phase vorgesehen ist. Das heißt, bei einem Zeitschlitz von z. B. 1µs für die zweite Phase (Rückkopplung) kann der Zeitschlitz für die erste Phase (Induktion) zwischen 5 bis 10 µs lang sein.

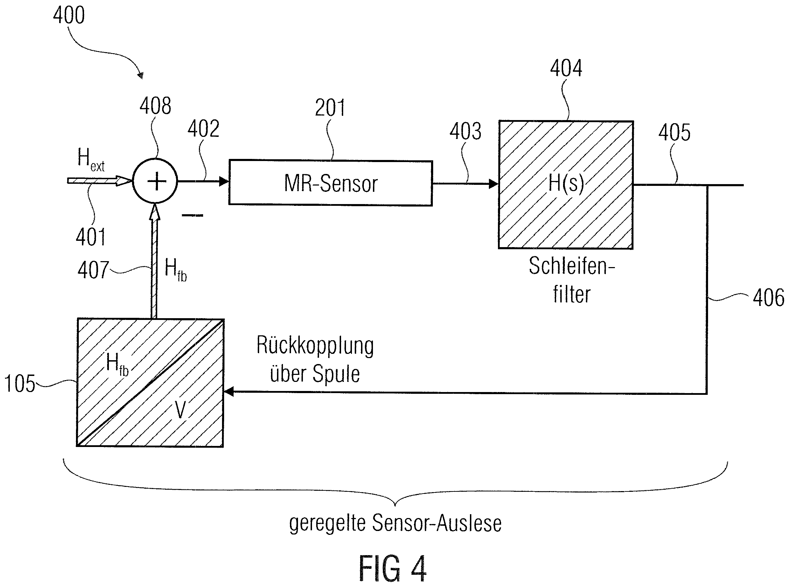

Figur 4 zeigt ein Blockschaltbild eines Regelkreises 400 für ein Sensormodul 101 mit Rückkopplung. Am Eingang des Regelkreises 400 liegt ein externes Magnetfeld 401 an. Dieses externe Magnetfeld ist das von dem Magneten 103 ausgehende Magnetfeld. Der Betrag des externen Magnetfelds 401 variiert mit dem Abstand des Magneten 103 zu der Spule 105.

Das externe Magnetfeld 401 liegt als Eingangssignal 402 an dem Eingang des Sensors 201 an. Der Sensor 201 misst Betrag und Richtung des Magnetfelds und gibt einen entsprechenden Wert als Ausgangssignal 403 aus. Das Ausgangssignal 403 ist üblicherweise ein analoges Spannungssignal, dessen Wert den Betrag und die Richtung des gemessenen Magnetfelds repräsentiert. Das Ausgangssignal 403 ist gleichzeitig das Eingangssignal des nachgeschalteten Schleifenfilters 404. Das Schleifenfilter 404 weist intern ein oder mehrere Funktionselemente auf, die die jeweils erhaltenen Eingangssignale 403 aufintegrieren. Das Ausgangssignal 405 des Schleifenfilters 404 ist somit ein über die Zeit aufaddiertes analoges Spannungssignal.

Der Regelkreis 400 weist nach dem Schleifenfilter 404 einen Rückkoppelpfad 406 auf. Das analoge Ausgangssignal 405 des Schleifenfilters 404 wird über diesen Rückkoppelpfad 405 an die Spule 105 geleitet. Die Spule 105 wirkt hier als Rückkoppelspule. Das rückgekoppelte analoge Spannungssignal 406 bewirkt einen Stromfluss in der Spule 105. Die Spule 105 erzeugt als Ausgangssignal 407 ein der Stromstärke entsprechendes Magnetfeld, das etwa betragsgleich und entgegengesetzt zu dem von dem Magneten 103 erzeugten externen Magnetfeld 401 ist. Der Wert dieses Ausgangssignals 407 wird in dem Summationspunkt 408 von dem Wert des Eingangssignals 401 subtrahiert.

Diese Rückkopplung bewirkt, dass das von dem Magneten 103 erzeugte Magnetfeld ausgeregelt wird, so dass der Sensor 201 in seinem begrenzten linearen Arbeitsbereich gehalten werden kann. Nichtlinearitäten sowie Hysterese-Effekte können so unterdrückt werden.

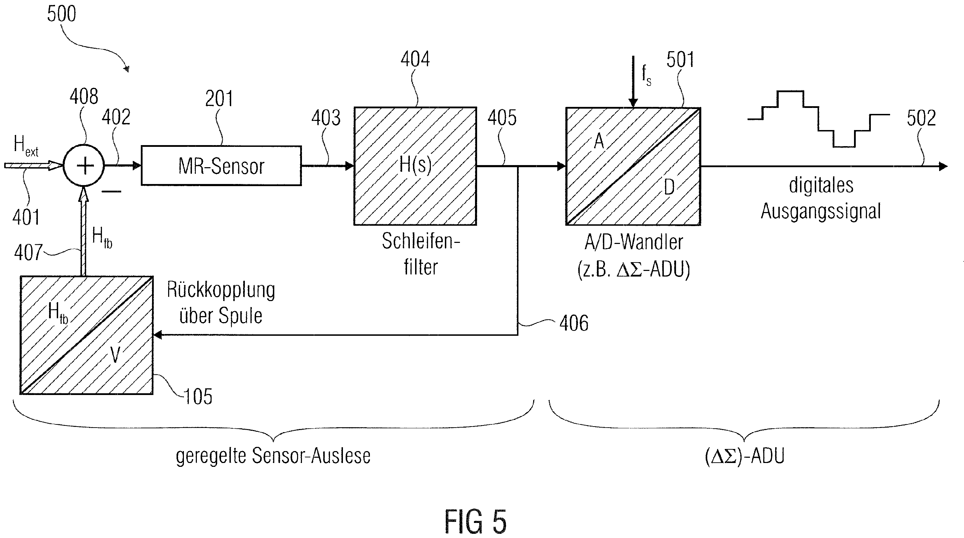

Figur 5 zeigt ein Blockschaltbild 500 einer weiteren Ausführungsform einer erfindungsgemäßen Positionserfassungsvorrichtung, bei der das Sensormodul einen nachgeschalteten Delta-Sigma-Analog-Digital-Wandler 501 aufweist, der ausgebildet ist, um ein analoges Sensorausgangssignal 405 in ein digitales Sensorausgangssignal 502 zu wandeln. Diese Ausführungsform entspricht im Wesentlichen der in Figur 4 gezeigten Ausführungsform, mit dem Unterschied, dass am Ausgang des Schleifenfilters 404 zusätzlich ein Delta-Sigma-Analog-Digital-Wandler 501 vorgesehen ist.

In anderen Worten ausgedrückt, besteht ein möglicher Ansatz zur Messung des Magnetfeldes im Einsatz von magnetoresistiven (MR-) Sensoren 201. Je nach verwendetem Typ (AMR, GMR, TMR, ...) ist mit größeren Nichtlinearitäten und Hysterese-Effekten zu rechnen. Diese können mittels einer magnetischen Rückregelung 406 stark unterdrückt werden. Hierfür wird am Sensor 201 eine Spule 105 angebracht, welche bestromt wird und ein Magnetfeld 407 erzeugt, welches dem externen entgegen gesetzt ist. Mittels geeigneter Regelung 400 kann hierdurch das Magnetfeld am Sensor 201 weitestgehend unterdrückt werden, so dass dieser immer in seinem optimalen Arbeitspunkt arbeitet. Diese Regelschleife 400 liefert ein analoges Ausgangssignal.

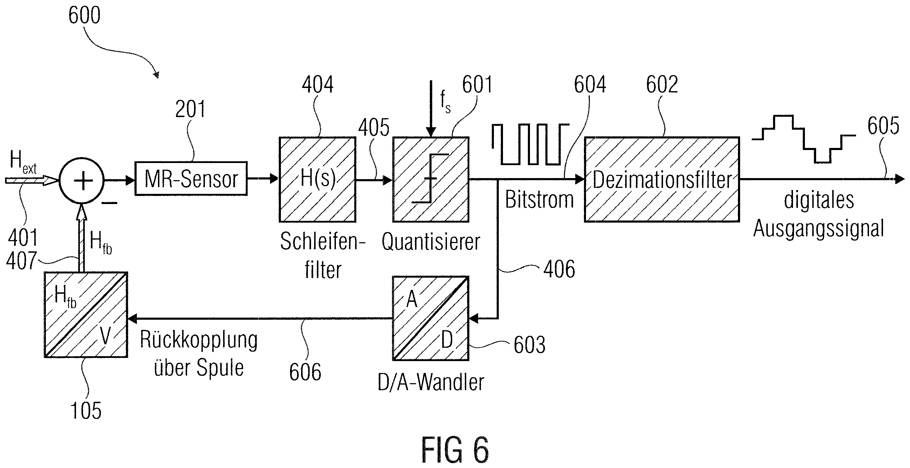

Ein etwas anders gelagerter Ansatz für die Regelschleife 500 ist, für die geregelte SensorAuslese eine Kombination mit einer Delta-Sigma-Analog-Digital-Wandlung (ΔΣ-ADU) zu verwenden. Figur 6 zeigt ein Blockschaltbild 600 einer solchen Ausführungsform. Das in Figur 6 gezeigte Blockschaltbild 600 entspricht im Wesentlichen dem in Figur 5 gezeigten Blockschaltbild 500 mit dem Unterschied, dass nach dem Schleifenfilter 404 ein Quantisierer 601, ein Dezimationsfilter 602 und ein Analog-Digital-Wandler 603 geschaltet sind.

Der Quantisierer 601 erzeugt aus dem analogen Ausgangssignal 405 des Schleifenfilters 404 einen Bitstrom 604. Dieser Bitstrom 604 wird von dem nachgeschalteten Dezimationsfilter 602 in ein digitales Ausgangssignal 605 umgesetzt.

Der Bitstrom 604 wird außerdem über den Rückkoppelpfad 406 zu der Spule 105 geleitet. Damit die Spule 105 das Bitstrom-Signal 604 verarbeiten kann, wird dieses zuvor durch den in den Rückkoppelpfad 406 integrierten Digital-Analog-Wandler in ein analoges Spannungssignal 606 gewandelt. Dieses analoge Spannungssignal 606 wird an die Spule 105 angelegt, die dann wiederum, bedingt durch den durchfließenden Strom, das entgegengesetzt gerichtete Magnetfeld 407 erzeugt.

Die geregelte Sensorauslese aus Figur 6 bietet ebenfalls den Vorteil, dass der (Magnetfeld-) Sensor 201 immer im (bzw. um den) optimalen Arbeitspunkt gehalten wird, womit Sensor-Nichtidealitäten, wie Temperaturdrift, Hysterese und Nichtlinearitäten effektiv unterdrückt werden (können). Dies ermöglicht eine hohe Linearität und Auflösung des gemessenen Magnetfeldes und damit eine hochgenaue Auflösung der aktuellen Position des (Zylinder-)Magneten 103. Gleichzeitig erlaubt das System 600 eine implizite Digitalisierung der gewonnenen Sensorsignale, so dass kein separater Analog-Digital-Wandler (ADU) notwendig ist, womit eine Reduktion der Systemkomponenten und des Energieverbrauchs möglich ist.

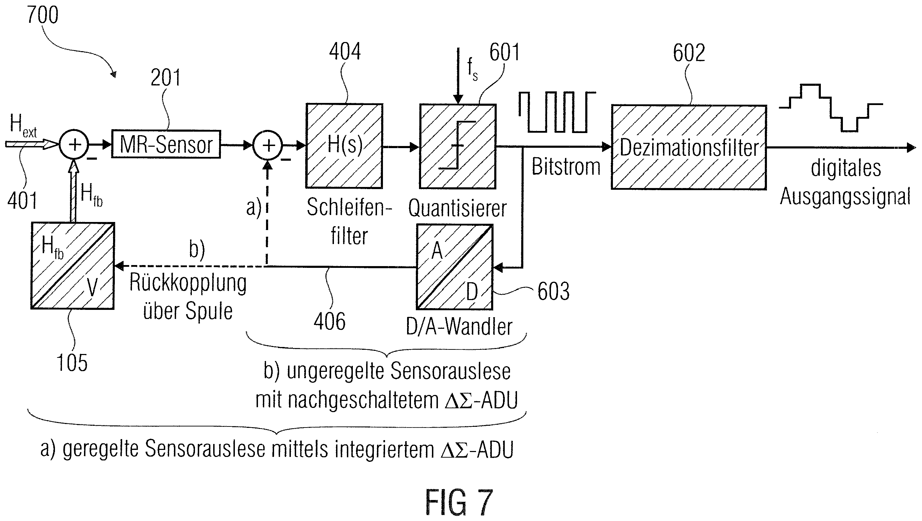

Weiterhin wäre es möglich, je nach aktueller Position des Magneten 103, anliegendem Magnetfeld und aktuellem Energievorrat, die Schaltung aus Figur 6 so umzukonfigurieren, dass eine ungeregelte Sensorauslese und nachfolgende Digitalisierung mittels ΔΣ-ADU erfolgt. Eine solche Anordnung ist in Form eines Blockschaltbildes 700 in Figur 7 gezeigt.

Dies würde den Energieverbrauch reduzieren (kein Strom zur Generierung eines Magnetfeldes an der Rückkoppelspule 105 nötig). Außerdem stünde der ΔΣ-ADU (nach einer Änderung verschiedener Konfigurationsparameter) für weitere ADU-Wandlungen innerhalb des Gesamtsystems zur Verfügung, was zu einer effizienteren Flächennutzung führt, da auf einen weiteren separaten ADU verzichtet werden kann.

Je nach Systemauslegung wären auch weitere Varianten denkbar, wie beispielsweise in dem Blockschaltbild 700 in Figur 7 gezeigt ist. Denkbar wäre z.B. eine klassische, rein analoge, Regelschleife plus einem separaten ADU. Je nach Systemaufbau könnte auch hier (durch eine Konfigurationsänderung) in den Closed-Loop ΔΣ-ADU-Modus und zurück umgeschaltet werden, womit der ADU ggf. für andere Zwecke verwendet werden könnte. Figur 7 zeigt somit die Konfigurierbarkeit der Rückkoppelschleife als elektromagnetischen ΔΣ-ADU und als rein elektrischen ΔΣ-ADU.

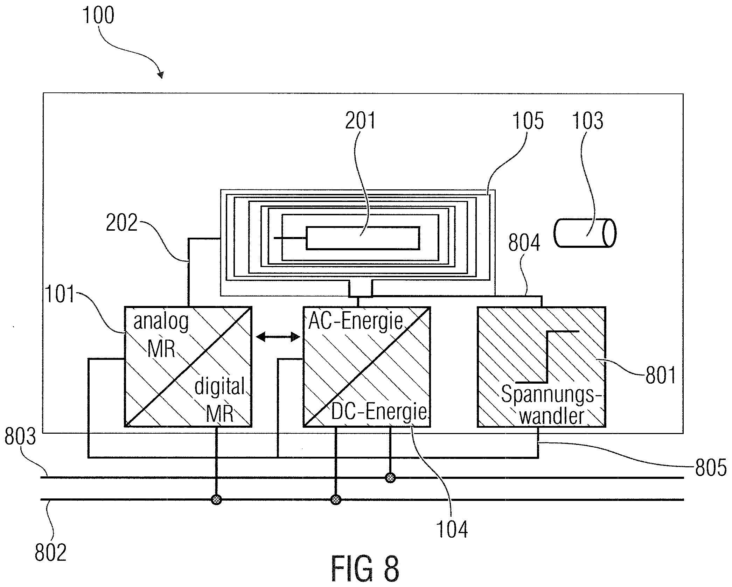

Figur 8 zeigt ein weiteres Ausführungsbeispiel einer erfindungsgemäßen Positionserfassungsvorrichtung 100. Diese Ausführungsform entspricht im Wesentlichen der mit Bezug auf die Figuren 1 und 2 beschriebenen Ausführungsformen, mit dem Unterschied, dass zusätzlich ein Spannungswandlermodul 801 vorgesehen ist.

Das Spannungswandlermodul 801 ist ausgebildet, um eine erste von der Spule 105 erzeugte Eingangsspannung, die geringer ist, als eine zweite Spannung, auf die das Energy-Harvester-Modul 104 anspricht, in eine höhere Ausgangsspannung zu wandeln und das Sensormodul 101 und/oder das Energy-Harvester-Modul 104 mit dieser Ausgangsspannung zu versorgen.

In anderen Worten weisen sowohl das Energy-Harvester-Modul 104 als auch das Sensormodul 101 eine Schwell-Einsatzspannung auf, ab der das jeweilige Modul 101, 104 anspricht und betriebsfähig ist. Je nach Stärke des von dem bewegbaren Magneten 103 ausgehenden Magnetfelds, bzw. abhängig vom Abstand des Magneten 103 zu der Spule 105, kann die in der Spule 105 induzierte Wechselspannung möglicher Weise nicht ausreichen, um das Energy-Harvester-Modul 104 bzw. das Sensormodul 101 zu betreiben.

Das Spannungswandlermodul 801 setzt daher diese zu geringe Induktionsspannung (Eingangsspannung) in eine höhere Ausgangsspannung um. Diese Ausgangsspannung ist höher als die Schwell-Einsatzspannung, ab der das jeweilige Modul 101, 104 anspricht und betriebsfähig ist. Mittels dieser angehobenen Ausgangsspannung können das Energy-Harvester-Modul 104 sowie das Sensormodul 101 ihre Funktion/en somit bereits frühzeitiger zur Verfügung stellen im Vergleich zu der zu niedrigen Eingangsspannung. Dies führt zu einem früheren Ansprechen der Module 101, 104 sowie zu einer höheren Genauigkeit bei der Positionserfassung.

Hierfür ist das Spannungswandlermodul 801 über eine Signalleitung 804 mit der Spule 105 verbunden. Sobald sich der Magnet 103 relativ zu der Spule 105 bewegt, wird eine Wechselspannung in der Spule 105 induziert. Je weiter der Magnet 103 von der Spule 105 entfernt ist, desto geringer ist der Betrag der induzierten Wechselspannung. Die induzierte Wechselspannung wird über die Signalleitung 804 zu dem Spannungswandlermodul 801 geleitet. Diese Wechselspannung wird auch als eine erste von der Spule erzeugte Eingangsspannung bezeichnet.

Das Spannungswandlermodul 801 wandelt die erste von der Spule erzeugte Eingangsspannung in eine höhere Ausgangsspannung um und leitet diese höhere Ausgangsspannung über eine Signalleitung 805 zu dem Energy-Harvester-Modul 104 und/oder zu dem Sensormodul 101.

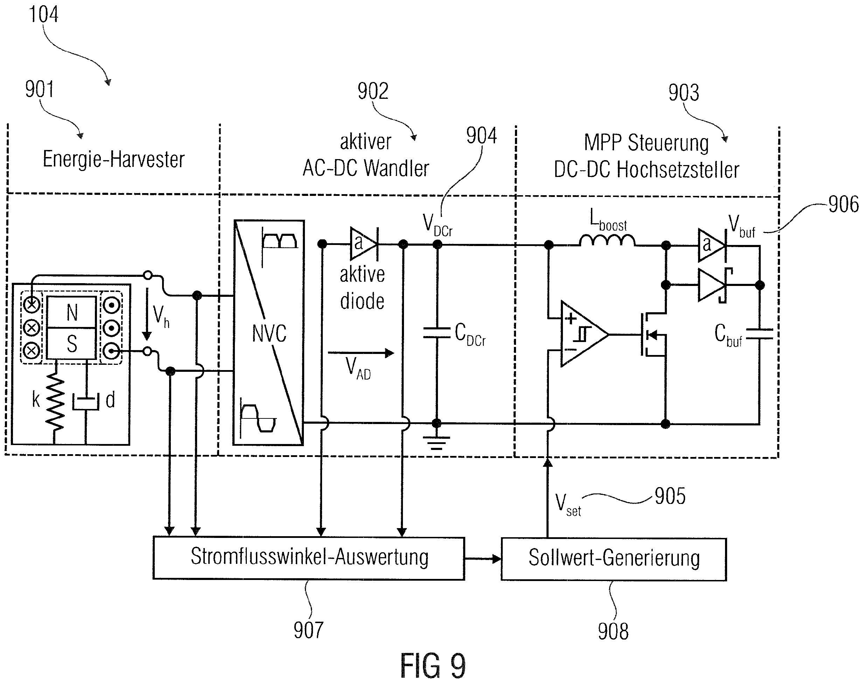

Das Sensormodul 101 kann, wie zuvor mit Bezug auf die Figuren 4 bis 7 beschrieben, einen analogen oder einen digitalen Regelkreis aufweisen. Das Energy-Harvester-Modul 104 kann ebenfalls unterschiedlich ausgeführt sein. Eine mögliche Ausführungsform des Energy-Harvester-Moduls 104 soll daher mit Bezug auf Figur 9 näher erläutert werden.

Figur 9 zeigt schematisch den Aufbau eines Energy-Harvester-Moduls 104, das im Wesentlichen aus drei Funktionsblöcken besteht. Ein erster Funktionsblock ist der Energieerzeugungs-Block 901, gefolgt von einem aktiven Gleichrichter-Block 902, dem wiederum ein geschalteter Aufwärtswandler-Block 903 nachgeschaltet ist.

Wie bereits erwähnt wurde, generiert das verwendete Energy-Harvester-Modul 104 eine Energie aus einer mittels eines bewegten Magneten 103 induzierten Wechselspannung in der Spule 105. Wird der Magnet 103 relativ zu der Spule 105 bewegt, so wird in der Spule 105 eine Wechselspannung induziert, welche zunächst in geeigneter Weise durch das Energy-Harvester-Modul 104 aufbereitet wird, bevor sie zur Versorgung des Sensormoduls 101 eingesetzt wird. Das Energy-Harvesting-Modul 104 übernimmt dabei folgende Aufgaben:
1. Gleichrichtung der Wechselspannung,
2. Optimierung der entnommenen Energie und
3. Regelung der Ausgangsspannung auf ein nutzbares Niveau.

Eine mögliche Implementierung des Energy-Harvester-Moduls 104 ist in Figur 9 zu sehen. Ein hocheffizienter aktiver Gleichrichter 902 (active AC-DC converter) sorgt dafür, dass die Wechselspannung äußerst verlustarm gleichgerichtet und geglättet wird. Daran angeschlossen ist ein geschalteter Aufwärtswandler 903 (MPP controlling DC-DC boost converter), welcher die Spannung des Gleichrichter-Ausgangs, V_{DCr} 904, auf eine Regelvorgabe Vₛₑₜ 905 setzt. Die Regelvorgabe 905 wird dynamisch so gesetzt, dass das Energy-Harvester-Modul 104 im optimalen Punkt betrieben wird, d.h. dass es seine maximal mögliche Leistung abgibt.

Nicht gezeigt ist ein weiterer Gleichspannungswandler, weicher die ungeregelte Spannung V_{buf} 906 in eine feste, geregelte Spannung von 2,2 V umwandelt, welche z.B. für die Versorgung von drahtlosen Sensorsystemen verwendet werden kann.

Das gezeigte Energy-Harvester-Modul 104 wertet mittels Stromflusswinkel-Auswertevorrichtung 907 den Stromflusswinkel (conduction angle) aus, d.h. den Zeitanteil des Stromflusses bezogen auf die Anregungs-Periodendauer. Dieser Stromflusswinkel ist ein direktes Maß dafür, inwiefern das Energy-Harvester-Modul 104 im Punkt der optimalen Leistungsabgabe betrieben wird.

Im Betrieb wird der Stromflusswinkel fortwährend durch die Stromflusswinkel-Auswertevorrichtung 907 gemessen und an den Block 908 (set-point generation) weitergeleitet, welcher aus dieser Information die Spannung Vₛₑₜ 905 erzeugt. Dieses Konzept hat gegenüber anderen Realisierungen den Vorteil, dass man keinen zweiten Referenz-Energy-Harvester benötigt, und dass das Energy-Harvester-Modul 104 nicht in regelmäßigen Abständen von der Power-Management-Schaltung abgekoppelt werden muss.

Es werden hierbei also Methoden zur optimierten Leistungsabgabe mittels Maximum Power Point Tracking (MPPT) umgesetzt. Beispielsweise mittels einer adaptiven kapazitiven Ladungspumpe werden Wechselspannungen in Gleichspannung konvertiert, um gleichzeitig das Energy-Harvester-Modul 104 im optimalen Arbeitspunkt zu betreiben, so dass dieses eine optimale Leistung abgibt. Ein alternatives MPPT-Verfahren, welches auf einem induktiven Aufwärtswandler basiert, erlaubt es, Wechselspannungen zwischen 0.44 V und 4.15 V mit einer Gesamteffizienz von 72 % in Gleichspannungen zu wandeln. Dieses Verfahren hat jedoch den Nachteil, dass zur Ermittlung des optimalen Arbeitspunktes ein zweiter Harvester benötigt wird.

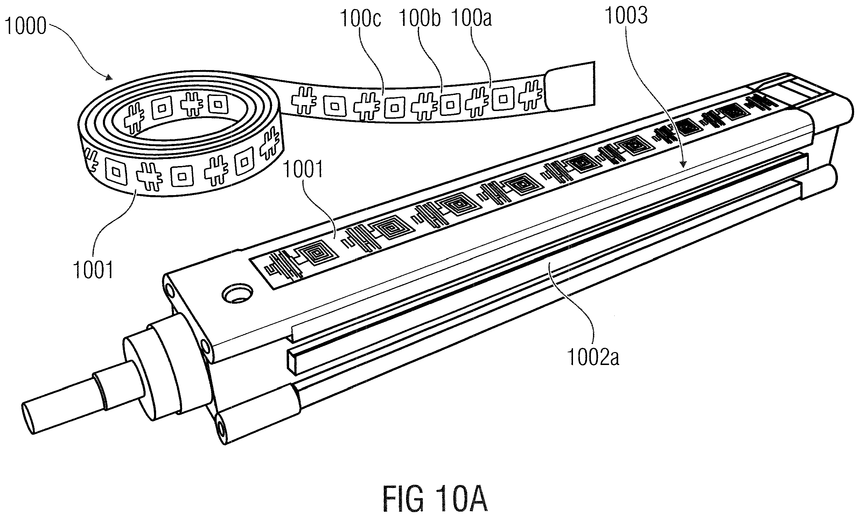

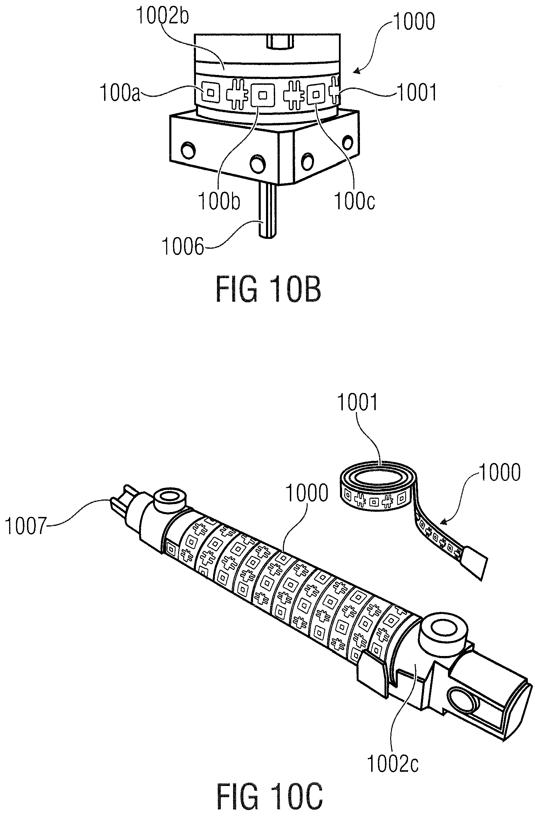

Gemäß einer Ausführungsform der Erfindung kann eine Positionserfassungsvorrichtung 100 auf oder in einer Folie angeordnet sein. Eine solche Ausführungsform ist in den Figuren 10A, 10B und 10C gezeigt.

Figur 10A zeigt eine Folie 1001 mit mehreren Positionserfassungsvorrichtungen 100a, 100b, 100c. Die Folie 1001 dient als ein gemeinsamer Träger, der die einzelnen Positionserfassungsvorrichtungen 100a, 100b, 100c trägt. Eine solche Anordnung mehrerer auf einem gemeinsamen Träger 1001 angeordneter Positionserfassungsvorrichtungen 100a, 100b, 100c bildet ein erfindungsgemäßes Positionserfassungssystem 1000.

Wie in Figur 10A zu erkennen ist, sind die einzelnen Positionserfassungsvorrichtungen 100a, 100b, 100c nebeneinander angeordnet. Die einzelnen Positionserfassungsvorrichtungen 100a, 100b, 100c sind untereinander über eine gemeinsame Energieleitung und/oder eine gemeinsame Datenleitung verbunden.

Diese gemeinsamen Leitungen sind in Figur 8 abgebildet. Die dargestellte Positionserfassungsvorrichtung 100 weist eine Datenleitung 802 sowie eine Energieversorgungsleitung 803 auf. Das Sensormodul 101 ist mit der Datenleitung 802 verbunden. Das Energy-Harvester-Modul 104 ist sowohl mit der Datenleitung 802 als auch mit der Energieversorgungsleitung 803 verbunden.

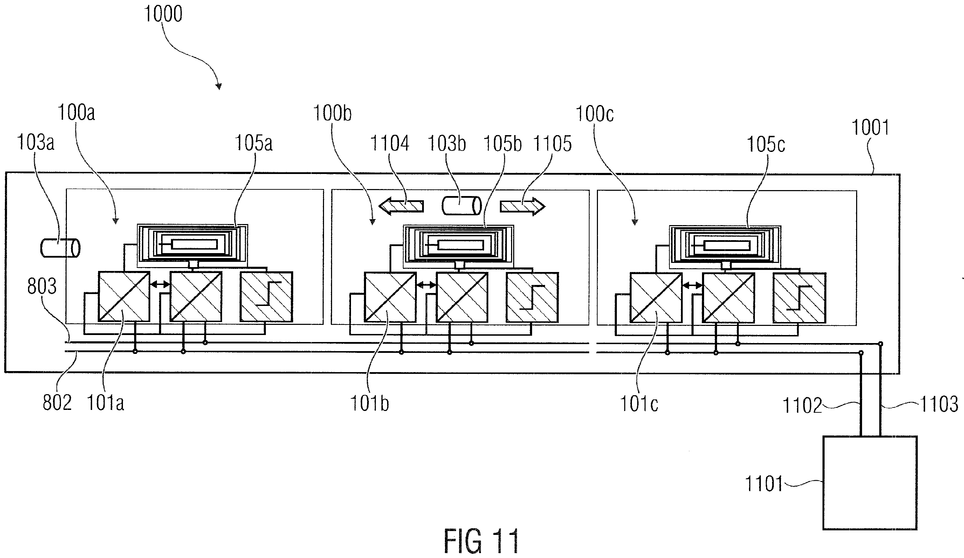

Figur 11 zeigt ein Blockschaltbild eines Positionserfassungssystems 1000 mit mehreren Positionserfassungsvorrichtungen 100a, 100b, 100c, die nebeneinander auf dem gemeinsamen Träger 1001 angeordnet sind. Die Datenleitung 802 sowie die Energieversorgungsleitung 803 werden auf dem gemeinsamen Träger 1001 durchgängig ausgebildet, das heißt jede Positionserfassungsvorrichtung 100a, 100b, 100c ist mit derselben Datenleitung 802 sowie mit derselben Energieversorgungsleitung 803 verbunden.

Das Positionserfassungssystem 1000 weist eine Steuervorrichtung 1101 auf. Die Steuervorrichtung 1101 ist mit allen Positionserfassungsvorrichtungen 100a, 100b, 100c verbunden. Hierfür weist die Steuervorrichtung 1101 eine erste und eine zweite Signalleitung 1102, 1103 auf. Die erste Signalleitung 1102 ist mit der gemeinsamen Datenleitung 802 verbunden. Die zweite Signalleitung 1103 ist mit der gemeinsamen Energieversorgungsleitung 803 verbunden.

Die Steuervorrichtung 1101 ist ausgebildet, um von jedem Sensormodul 101a, 101b, 101c ein Positionssignal empfangen zu können. Das heißt, wenn sich der bewegbare Magnet 103 in der Nähe einer Spule 105a, 105b, 105c bewegt, wird in dieser Spule eine Spannung induziert, die von dem jeweiligen Sensormodul 101a, 101, 101c detektiert wird. Falls sich beispielsweise der Magnet 103a, wie in Figur 11 gezeigt, links von der ersten Positionserfassungsvorrichtung 101a befindet und sich relativ zu dem Positionserfassungssystem 1000 bewegt, wird in der Spule 105a der ersten Positionserfassungsvorrichtung 100a eine Spannung induziert, die von dem Sensormodul 101a detektiert wird. Möglicherweise wird eine schwächere Spannung in der Spule 105b der zweiten Positionserfassungsvorrichtung 100b induziert, die von dem Sensormodul 101b detektiert wird. Möglicherweise wird aber in der Spule 105c der dritten Positionserfassungsvorrichtung 100c keine Spannung mehr induziert, da der Abstand zwischen Spule 105c und Magnet 103a zu groß ist, so dass deren Sensormodul 101c kein Signal detektiert.

Die Steuervorrichtung 1101 ist zwar ausgebildet, um von allen Sensormodulen 101a, 101b, 101c ein Positionssignal empfangen zu können. In dem eben beschriebenen Fall wird die Steuervorrichtung 1101 jedoch von dem Sensormodul 101c der dritten Positionserfassungsvorrichtung 100c kein Signal empfangen.

Die Steuervorrichtung 1101 ist ausgebildet, um, basierend auf den empfangenen Sensorsignalen, die Aufenthaltsposition des Magneten 103 zu bestimmen. Dies kann beispielsweise über die Auswertung der Signalstärke der empfangenen Signale erfolgen. In dem zuvor beschriebenen Fall, in dem sich der Magnet 103a, wie in Figur 11 gezeigt, links von der ersten Positionserfassungsvorrichtung 100a befindet, wird der Signalpegel des ersten Sensormoduls 101a größer sein als der Signalpegel des zweiten Sensormoduls 101b, der wiederum größer sein wird als der Signalpegel des dritten Sensormoduls 101c.

Die Steuervorrichtung 1101 ist ausgebildet, um basierend auf der ermittelten Aufenthaltsposition des Magneten 103, von dieser Aufenthaltsposition entfernte Positionserfassungsvorrichtungen 100b, 100c selektiv von der gemeinsamen Energieversorgungsleitung 803 zu trennen.

In dem oben beschriebenen Fall, in dem sich der Magnet 103a links von der ersten Positionserfassungsvorrichtung 100a befindet, können die zweite und die dritte Positionserfassungsvorrichtung 100b, 100c von der gemeinsamen Energieversorgungsleitung 803 getrennt werden, da diese beiden Positionserfassungsvorrichtungen 100b, 100c weiter von der Aufenthaltsposition des Magneten 103a entfernt sind als die erste Positionserfassungsvorrichtung 100a.

Die auf der gemeinsamen Energieversorgungsleitung 803 verfügbare Energie kann somit bedarfsgerecht auf die jeweilige Positionserfassungsvorrichtung 100a verteilt werden. Andere Positionserfassungsvorrichtungen 100b, 100c, die möglicherweise Verbraucher aufweisen, können hingegen bedarfsgerecht abgeschaltet werden. Dies kann helfen, ein energiesparendes Positionserfassungssystem 1000 zu realisieren.

In einer weiteren Ausführungsform ist die Steuervorrichtung 1101 ausgebildet, um mittels des Signalverlaufs eines Sensormoduls 101a, 101b, 101c einer Positionserfassungsvorrichtung 100a, 100b, 100c die Bewegungsrichtung des Magneten 103 zu erfassen und, basierend auf der Bewegungsrichtung, von dieser Aufenthaltsposition entfernte Positionserfassungsvorrichtungen 100a, 100b, 100c, mit Ausnahme der in Bewegungsrichtung unmittelbar benachbart angeordneten Positionserfassungsvorrichtung 100a, 100b, 100c, selektiv von der gemeinsamen Energieversorgungsleitung 803 zu trennen.

Dies soll mit Bezug auf Figur 11 näher erläutert werden. Es kann beispielsweise sein, dass sich der Magnet 103b in der Nähe der Spule 105b der zweiten Positionserfassungsvorrichtung 100b befindet. Je nachdem in welche Richtung sich der Magnet 103b nun bewegt, wird ein unterschiedliches Signal von dem Sensormodul 101b detektiert. Alternativ oder zusätzlich kann das Sensorsignal des Sensormoduls der unmittelbar benachbarten Positionserfassungsvorrichtung 100a, 100c zur Erkennung der Bewegungsrichtung des Magneten 103b genutzt werden.

Wenn sich der Magnet 103b beispielsweise in Richtung der ersten Positionserfassungsvorrichtung 100a bewegt, was mit dem Pfeil 1104 dargestellt ist, erkennt die Steuervorrichtung 1101 anhand des Signalverlaufs des Sensorsignals des Sensormoduls 105b diese Bewegungsrichtung des Magneten 103b. Alternativ oder zusätzlich kann die Steuervorrichtung 1101 die Bewegungsrichtung 1104 des Magneten 103b dadurch detektieren, dass das Sensorsignal des Sensormoduls 101a der ersten Positionserfassungsvorrichtung 100a stärker wird, während hingegen das Sensorsignal des Sensormoduls 101c der dritten Positionserfassungsvorrichtung 100c schwächer wird.

Da der Steuervorrichtung 1101 somit also bekannt ist, dass sich der Magnet 103b in Richtung 1104 der ersten Positionserfassungsvorrichtung 100a bewegt, können alle Positionserfassungsvorrichtungen, mit Ausnahme der ersten Positionserfassungsvorrichtung 100a, abgeschaltet werden, um Energie zu sparen.

Wenn sich der Magnet 103b hingegen in Richtung 1105 der dritten Positionserfassungsvorrichtung 100c bewegt, können alle Positionserfassungsvorrichtungen, mit Ausnahme der dritten Positionserfassungsvorrichtung 100c, abgeschaltet werden, um Energie zu sparen.

Ein erfindungsgemäßes Positionserfassungssystem 1000 kann beispielsweise zur Erfassung der Position eines Kolbens in einem Zylinder genutzt werden. Die Figuren 10A, 10B und 10C zeigen derartige Ausführungsbeispiele.

Figur 10A zeigt einen etwa rechteckigen und langgestreckten Zylinder 1002a. Auf einer planen Oberseite 1003 des Zylinders 1002a ist außenseitig ein erfindungsgemäßes Positionserfassungssystem 1000 angeordnet. Das Positionserfassungssystem 1000 ist als Folie ausgebildet, die auf den Zylinder 1002a geklebt ist.

In dem Zylinder 1002a bewegt sich ein, hier nicht sichtbarer Kolben, linear auf und ab. An dem Kolben ist ein Magnet angeordnet, der sich mit dem Kolben zusammen bewegt. Der Magnet dient zur Positionserfassung des Kolbens mittels des zuvor beschriebenen erfindungsgemäßen Positionserfassungssystems 1000.

Figur 10B zeigt eine weitere Ausführungsform eines Zylinders 1002b mit einem erfindungsgemäßen Positionserfassungssystem 1000. Dieser Zylinder 1002b ist als ein Kreiszylinder ausgebildet.

In dem Zylinder 1002b befindet sich ein, hier nicht sichtbarer, Kolben, der sich rotatorisch um eine Rotationsachse 1006 herum bewegt. Der Kolben bewegt sich also auf einer Kreisbahn entlang der Innenfläche des Kreiszylinders 1002b. An dem Kolben ist ein Magnet angeordnet, der sich mit dem Kolben zusammen bewegt. Der Magnet dient zur Positionserfassung des Kolbens mittels des zuvor beschriebenen erfindungsgemäßen Positionserfassungssystems 1000.

Figur 10C zeigt eine weitere Ausführungsform eines Zylinders 1002c mit einem erfindungsgemäßen Positionserfassungssystem 1000. Dieser Zylinder 1002b ist als ein langgestreckter Kreiszylinder ausgebildet.

In dem Zylinder 1002b befindet sich ein, hier nicht sichtbarer, Kolben. An dem Kolben ist ein Magnet angeordnet, der sich mit dem Kolben zusammen bewegt. Der Kolben kann linear entlang der Erstreckungsrichtung des Zylinders 1002c bewegbar sein. Der Kolben kann aber auch in Form einer kombinierten Translations- und Rotationsbewegung in dem Zylinder bewegbar sein. Hierfür kann der Kolben beispielsweise an einer Spindel 1007 angebracht sein, entlang derer sich der Kolben in dem Zylinder auf- und abschraubt.

Der gemeinsame Träger, d.h. die Folie 1001, des Positionserfassungssystems 1000 ist hier außenseitig um den Kreiszylinder 1002c helixförmig herumgewickelt. Somit kann dieses Positionserfassungssystem 1000 die Position des an dem Kolben angeordneten Magneten sowohl bei einer linearen translatorischen Bewegung des Kolbens in dem Zylinder 1002c, als auch bei einer helixförmigen Schraubbewegung des Kolbens in dem Zylinder 1002c erfassen.

Bei den in den Figuren 10A und 10B gezeigten Ausführungsformen erstreckt sich der gemeinsame Träger, d.h. die Folie 1001, entlang der Bewegungsrichtung des Magneten. Bei der in Figur 10C gezeigten Ausführungsform ist die Folie 1001 zwar helixförmig angeordnet. Die Folie 1001 erstreckt sich aber ebenfalls entlang der Bewegungsrichtung des Magneten, sofern sich dieser in dem Zylinder ebenfalls helixförmig bewegt.

Zusammengefasst handelt es sich bei der vorliegenden Erfindung um eine hybride Funktionskomponente aus Energie-Harvester 104 und einer integrierten Sensorik 101 zur Bewertung von magnetischen Feldern, die z.B. als Wegsensorik eingesetzt werden kann.

Die Erfindung konzentriert eine Realisierung eines Energie-Harvesters 104 mit einer zusätzlichen Funktionalität einer Sensorik 101, die auf dem Magneto-Resistiven Prinzip basiert.

Die angestrebte Realisierung in einer folienbasierten Technologie eröffnet die Möglichkeit, eine optimierte Höchstintegration von Energiekonvertierung und Sensorik zur Bestimmung von magnetischen Feldern umzusetzen.

Die Verschaltung dieser Systeme 100a, 100b, 100c wird so angeordnet, dass eine funktionale Aneinanderreihung der Funktionskomponenten 101, 104 gegeben ist. Hierüber ist eine multiple Energiegenerierung über den gesamten Verfahrweg eines Kolbens im Pneumatik-Zylinder 1002a, 1002b, 1002c bei sich ändernden Feldern möglich.

Über eine informationstechnische Fusionierung der Daten mehrerer Systeme kann zeitgleich eine Weginformation eines vorbeifliegenden Magneten generiert werden.

Zur effizienten Flächennutzung und Miniaturisierung ist eine Realisierung des Gesamtsystems 100 als eine anwendungsspezifische integrierte Schaltung (ASIC) vorteilhaft. Alle Systemkomponenten werden so angeordnet, dass das ASIC in weiten Bereichen anpassbar ist, um die Verwendbarkeit innerhalb verschiedener Systemauslegungen zu garantieren. Dies umfasst insbesondere die Anpassbarkeit an verschiedene, für die hochauflösende MR-Sensorik 101 notwendigen, Sensoren 201 und Rückkoppelspulen 105, sowie die Anpassbarkeit an verschiedenen Energy-Harvesting Elemente 104.

Eine AVT auf Folie eröffnet eine Umsetzung eines pneumatisch betriebenen Zylinders als analoges Aktor-Stellglied. → Industrie 4.0
- Die Verschaltung dieser Systeme 100 wird so angeordnet, dass eine Aneinanderreihung der Funktionskomponenten 101, 104 gegeben ist.
- Hierüber ist eine multiple Energiegenerierung möglich bei sich ändernden Feldern.
- Über eine informationstechnische Fusionierung der Daten mehrerer Systeme 100a, 100b, 100c kann zeitgleich eine Weginformation eines vorbeifliegenden Magneten generiert werden.

Jede Funktionskomponente 101, 104 ist über einen Daten- und Powerbus 802, 803 von einer zentralen Systeminstanz 1101 adressierbar, somit können sensorische Informationen und Informationen über Energiepotentiale kommuniziert werden. Diese Gesamtfunktionalität führt zu einer energieautarken/autonomen stabilen Industrie 4.0 Komponente.

Ein wichtiger Bestandteil der Erfindung ist der Energy-Harvester 104, welcher aus dem am Zylinderkopf befestigten Permanentmagneten und der am Kolbengehäuse angebrachten Spule besteht.

Ziel der erfindungsgemäßen Vorrichtung ist es, die Kolbenposition innerhalb eines pneumatischen Zylinders 1002 hochgenau detektieren zu können. Neben der Sicherstellung der Energieversorgung mittels des Energy-Harvester-Moduls 104 und des ULV Boost Converter Moduls 801 gilt es hierfür die Größe und Richtung des Magnetfeldes präzise zu detektieren/bestimmen, welches vom Zylindermagneten ausgeht. Dies ist Aufgabe des Sensor-Moduls 101. Weitere, der Erfindung ähnliche, Positionserfassungsvorrichtungen sind aus folgenden Quellen bekannt:
[1] M.Kuderer, S.Monastyrnyy, Y.Manoli: "Geregelte Auslese eines AMR-Sensors mit impliziter Digitalisierung des magnetischen Eingangssignals", Proceedings of the Mikrosystemtechnik-Kongress, Seiten: 833 - 836, 2011.
[2] M.Kuderer, R.Nouna, M.Keller, D.Mintenbeck, Y.Manoli: "Implementierung einer magnetischen Delta-Sigma-Rückkopplung zur Regelung der Auslese eines AMR-Magnetfeldsensors", Proceedings of the Mikrosystemtechnik-Kongress, Seiten: 71 - 74, 2013.

## Patentansprüche

1. Positionserfassungsvorrichtung (100) mit
einem Sensormodul (101) zum Ausgeben eines Sensorausgangssignals (102), das von einer Position eines Magneten (103) abhängt, und
einem Energy-Harvester-Modul (104) zum Erzeugen von Energie für das Sensormodul (101), wobei das Energy-Harvester-Modul (104) den Magneten (103) und eine Spule (105) aufweist,
wobei die Spule (105) konfiguriert ist, um eine mittels einer Bewegung des Magneten (103) induzierte Spannung zu liefern, und um von dem Sensormodul (101) mit einem Strom beaufschlagt zu werden, der ein Magnetfeld erzeugt, das dem von dem Magneten (103) bewirkten Magnetfeld entgegengesetzt gerichtet ist.

2. Positionserfassungsvorrichtung (100) nach Anspruch 1, wobei das Sensormodul (101) einen magnetoresistiven Sensor (201), insbesondere einen anisotropen magnetoresistiven AMR-Sensor, aufweist, der ausgebildet ist, um den Betrag und/oder die Richtung des von dem Magneten (103) bewirkten Magnetfelds zu bestimmen.

3. Positionserfassungsvorrichtung (100) nach einem der vorhergehenden Ansprüche, wobei die Spule (105) konfiguriert ist, um eine mittels einer Bewegung des Magneten (103) induzierte Spannung zu liefern, und wobei das Sensormodul (101) mit einer weiteren Spule (205) gekoppelt ist, und das Sensormodul (101) die weitere Spule (205), in Abhängigkeit von einem Sensorausgangssignal (102), derart ansteuert, dass die weitere Spule (205) ein Magnetfeld erzeugt, das dem von dem Magneten (103) erzeugten Magnetfeld entgegengesetzt gerichtet ist.

4. Positionserfassungsvorrichtung (100) nach einem der vorhergehenden Ansprüche, wobei die Positionserfassungsvorrichtung (100) ferner eine Schaltvorrichtung (301) aufweist, mittels derer die Spule (105) wahlweise mit dem Energy-Harvester-Modul (104) oder mit dem Sensormodul (101) koppelbar ist.

5. Positionserfassungsvorrichtung (100) nach Anspruch 4, wobei die Schaltvorrichtung (301) ausgebildet ist, um die Spule (105) während einer ersten Phase mit dem Energy-Harvester-Modul (104) und während einer zweiten Phase mit dem Sensormodul (101) zu koppeln.

6. Positionserfassungsvorrichtung (100) nach einem der vorhergehenden Ansprüche, wobei das Sensormodul (101) einen Delta-Sigma-Analog-Digital-Wandler (501) aufweist, der ausgebildet ist, um ein analoges Sensorausgangssignal (405) in ein digitales Sensorausgangssignal (502) zu wandeln.

7. Positionserfassungsvorrichtung (100) nach einem der vorhergehenden Ansprüche, die ferner ein Spannungswandlermodul (801) aufweist, das ausgebildet ist, um eine erste von der Spule (105) erzeugte Eingangsspannung, die geringer ist als eine zweite Spannung, auf die das Energy-Harvester-Modul (104) anspricht, in eine höhere Ausgangsspannung zu wandeln und das Sensormodul (101) und/oder das Energy-Harvester-Modul (104) mit dieser höheren Ausgangsspannung zu versorgen.

8. Positionserfassungsvorrichtung (100) nach einem der vorhergehenden Ansprüche, die auf oder in einer Folie (1001) angeordnet ist.

9. Positionserfassungssystem (1000) mit mehreren Positionserfassungsvorrichtungen (100a, 100b, 100c) nach einem der vorhergehenden Ansprüche, die nebeneinander auf einem gemeinsamen Träger (1001) angeordnet sind und eine gemeinsame Datenleitung (802) und/oder eine gemeinsame Energieleitung (803) aufweisen.

10. Positionserfassungssystem (1000) nach Anspruch 9, wobei sich der gemeinsame Träger (1001) entlang des Bewegungswegs des Magneten (103) erstreckt.

11. Positionserfassungssystem (1000) nach Anspruch 9 oder 10, wobei das Positionserfassungssystem (1000) eine Steuervorrichtung (1101) aufweist, die mit allen Positionserfassungsvorrichtungen (100a, 100b, 100c) verbunden ist und ausgebildet ist, um von jedem Sensormodul (101a, 101b, 101c) ein Positionssignal empfangen zu können und, basierend auf den empfangenen Sensorsignalen, eine Aufenthaltsposition des Magneten (103) zu bestimmen.

12. Positionserfassungssystem (1000) nach Anspruch 11, wobei die Steuervorrichtung (1101) ausgebildet ist, um basierend auf der ermittelten Aufenthaltsposition des Magneten (103), von dieser Aufenthaltsposition entfernte Positionserfassungsvorrichtungen (100b, 100c) selektiv von der gemeinsamen Energieleitung (803) zu trennen.

13. Positionserfassungssystem (1000) nach Anspruch 12, wobei die Steuervorrichtung (1101) ausgebildet ist, um mittels des Signalverlaufs eines Sensormoduls (101b) einer Positionserfassungsvorrichtung (101b) die Bewegungsrichtung (1104, 1105) des Magneten (103b) zu erfassen und, basierend auf der Bewegungsrichtung (1104, 1105), von dieser Aufenthaltsposition entfernte Positionserfassungsvorrichtungen (100a, 100c), mit Ausnahme der in Bewegungsrichtung (1104, 1105) unmittelbar benachbart angeordneten Positionserfassungsvorrichtung (100a), selektiv von der gemeinsamen Energieleitung (803) zu trennen.

14. Zylinder (1002a, 1002b, 1002c) mit einem Positionserfassungssystem (1000) nach einem der Ansprüche 9 bis 13, wobei der Zylinder (1002a, 1002b, 1002c) einen bewegbaren Kolben aufweist, und der Magnet an dem Kolben angeordnet ist, und wobei das Positionserfassungssystem (1000) an dem Zylinder (1002a, 1002b, 1002c) entlang der Bewegungsrichtung des Kolbens angeordnet ist.

15. Verfahren zum Erfassen einer Position eines Magneten (103), wobei das Verfahren die folgenden Schritte aufweist:
Bereitstellen eines Positionserfassungssystems (1000) mit mindestens zwei auf einem gemeinsamen Träger (1001) angeordneten Positionserfassungsvorrichtungen (100a, 100b) nach einem der Ansprüche 1 bis 8 und Anordnen des Positionserfassungssystems (1000) an einem Zylinder (1002a, 1002b, 1002c) entlang der Bewegungsrichtung des Magneten (103),
Bereitstellen einer Spule (105) und Erzeugen einer mittels einer Bewegung des Magneten (103) induzierten Spannung in der Spule (105), und Beaufschlagen der Spule (105) mit einem Strom zum Erzeugen eines Magnetfelds, das dem von dem Magneten bewirkten Magnetfeld entgegengesetzt gerichtet ist,
Erzeugen und Bereitstellen der in der Spule (105) induzierten Spannung für das Sensormodul (101), und
Ausgeben eines Sensorausgangssignals (102) des Sensormoduls (101), wobei das Sensorausgangssignal (102) von der Position des Magneten (103) abhängt.

## Claims

1. Position detecting apparatus (100) comprising
a sensor module (101) for outputting a sensor output signal (102) depending on a position of a magnet (103), and
an energy harvester module (104) for generating energy for the sensor module (101), the energy harvester module (104) comprising the magnet (103) and a coil (105),
wherein the coil (105) is configured to provide a voltage induced by means of a movement of the magnet (103) and to be provided with a current by the sensor module (101) generating a magnetic field that is directed opposite to the magnetic field effected by the magnet (103).

2. Position detecting apparatus (100) according to claim 1, wherein the sensor module (101) comprises a magnetoresistive sensor (201), in particular an anisotropic magnetoresistive AMR sensor that is configured to determine the amount and/or the direction of the magnetic field effected by the magnet (103).

3. Position detecting apparatus (100) according to one of the preceding claims, wherein the coil (105) is configured to provide a voltage induced by means of a movement of the magnet (103), and wherein the sensor module (101) is coupled to a further coil (205) and the sensor module (101) controls the further coil (295) in dependence on a sensor output signal (102) such that the further coil (205) generates a magnetic field that is directed opposite to the magnetic field generated by the magnet (103).

4. Position detecting apparatus (100) according to one of the preceding claims, wherein the position detecting apparatus (100) further comprises a switching apparatus (301) by means of which the coil (105) can be selectively coupled to the energy harvester module (104) or the sensor module (101).

5. Position detecting apparatus (100) according to claim 4, wherein the switching apparatus (301) is configured to couple the coil (105) to the energy harvester module (104) during a first phase and to the sensor module (101) during a second phase.

6. Position detecting apparatus (100) according to one of the preceding claims, wherein the sensor module (101) comprises a delta-sigma analog-to-digital converter (501) that is configured to convert an analog sensor output signal (401) into a digital sensor output signal (502).

7. Position detecting apparatus (100) according to one of the preceding claims, further comprising a voltage converter module (801) that is configured to convert a first input voltage generated by the coil (105) that is lower than a second voltage to which the energy harvester module (104) responds into a higher output voltage and to supply the sensor module (101) and/or the energy harvester module (104) with this higher output voltage.

8. Position detecting apparatus (100) according to one of the preceding claims arranged on or in a film (1001).

9. Position detecting system (1000) having several position detecting apparatuses (100a, 100b, 100c) according to one of the preceding claims that are arranged beside one another on a common carrier (1001) and have a common data line (802) and/or a common energy line (803).

10. Position detecting system (1000) according to claim 9, wherein the common carrier (1001) extends along the path of motion of the magnet (103).

11. Position detecting system (1000) according to claim 9 or 10, wherein the position detecting system (1000) comprises a control apparatus (1101) that is connected to all position detecting apparatuses (100a, 100b, 100c) and is configured to be able to receive a position signal from each sensor module (101a, 101b, 101c) and to determine a position of the magnet (103) based on the received sensor signals.

12. Position detecting system (1000) according to claim 11, wherein the control apparatus (1101) is configured to selectively separate, based on the determined location of the magnet (103), position detecting apparatuses (100a, 100c) remote from this location from the common energy line (803).

13. Position detecting system (1000) according to claim 12, wherein the control apparatus (1101) is configured to detect the direction of movement (1104, 1105) of the magnet (103b) by means of the waveform of a sensor module (101b) of a position detecting apparatus (101b) and to selectively separate, based on this direction of movement (1104, 1105), position detecting apparatuses (100a, 100c) remote from this location, with the exception of the position detecting apparatus (100a) arranged immediately adjacent in the direction of movement (1104, 1105), from the common energy line (803).

14. Cylinder (1002a, 1002b, 1002c) comprising a position detecting system (1000) according to one of claims 9 to 13, wherein the cylinder (1002a, 1002b, 1002c) comprises a movable piston and the magnet is arranged at the piston and wherein the position detecting system (1000) is arranged at the cylinder (1002a, 1002b, 1002c) along the direction of movement of the piston.

15. Method for detecting a position of a magnet (103), the method comprising the steps of:
providing a position detecting system (1000) with at least two position detecting apparatuses (100a, 100b) according to one of claims 1 to 8 arranged on a common carrier (1001) and arranging the position detecting system (1000) at a cylinder (1002a, 1002b, 1002c) along the direction of movement of the magnet (103),
providing a coil (105) and generating a voltage induced by means of a movement of the magnet (103) in the coil (105) and providing the coil (105) with a current for generating a magnetic field that is directed opposite to the magnetic field effected by the magnet,
generating and providing the voltage induced in the coil (105) for the sensor module (101) and
outputting a sensor output signal (102) of the sensor module (101), wherein the sensor output signal (102) depends on the position of the magnet (103).

## Revendications

1. Dispositif de détection de position (100), avec
un module capteur (101) destiné à sortir un signal de sortie de capteur (102) qui dépend d'une position d'un aimant (103), et
un module capteur d'énergie (104) destiné à générer de l'énergie pour le module capteur (101), où le module capteur d'énergie (104) présente l'aimant (103) et une bobine (105),
dans lequel la bobine (105) est configurée pour fournir une tension induite par un déplacement de l'aimant (103) et pour être soumis par le module de capteur (101) à un courant qui génère un champ magnétique qui est orienté de manière opposée au champ magnétique provoqué par l'aimant (103).

2. Dispositif de détection de position (100) selon la revendication 1, dans lequel le module capteur (101) présente un capteur magnéto-résistif (201), en particulier un capteur AMR magnéto-résistif anisotrope qui est réalisé pour déterminer la quantité et/ou à la direction du champ magnétique provoqué par l'aimant (103).

3. Dispositif de détection de position (100) selon l'une des revendications précédentes, dans lequel la bobine (105) est configurée pour fournir une tension induite par un déplacement de l'aimant (103), et dans lequel le module capteur (101) est couplé à une autre bobine (205), et le module capteur (101) active l'autre bobine (205) en fonction d'un signal de sortie de capteur (102) de sorte que l'autre bobine (205) génère un champ magnétique qui est orienté de manière opposée au champ magnétique généré par l'aimant (103).

4. Dispositif de détection de position (100) selon l'une des revendications précédentes, dans lequel le dispositif de détection de position (100) présente par ailleurs un dispositif de commutation (301) au moyen duquel la bobine (105) peut être couplée alternativement au module capteur d'énergie (104) ou au module capteur (101).

5. Dispositif de détection de position (100) selon la revendication 4, dans lequel le dispositif de commutation (301) est réalisé pour coupler la bobine (105) pendant une première phase au module capteur d'énergie (104) et pendant une deuxième phase au module capteur (100).

6. Dispositif de détection de position (100) selon l'une des revendications précédentes, dans lequel le module capteur (101) présente un convertisseur delta-sigma analogique-numérique (501) qui est réalisé pour convertir un signal de sortie de capteur analogique (405) en un signal de sortie de capteur numérique (502).

7. Dispositif de détection de position (100) selon l'une des revendications précédentes, présentant par ailleurs un module de conversion de tension (801) réalisé pour convertir une première tension d'entrée générée par la bobine (105), qui est inférieure à une deuxième tension à laquelle réagit le module capteur d'énergie (104), en une tension de sortie supérieure, et pour alimenter le module capteur (101) et/ou le module capteur d'énergie (104) par cette tension de sortie supérieure.

8. Dispositif de détection de position (100) selon l'une des revendications précédentes, qui est disposé sur ou dans un film (1001).

9. Système de détection de position (1000) avec plusieurs dispositifs de détection de position (100a, 100b, 100c) selon l'une des revendications précédentes qui sont disposés côte à côte sur un support commun (1001) et présentent une ligne de données commune (802) et/ou une ligne d'énergie commune (803).

10. Système de détection de position (1000) selon la revendication 9, dans lequel le support commun (1001) s'étend le long du trajet de déplacement de l'aimant (103).

11. Système de détection de position (1000) selon la revendication 9 ou 10, dans lequel le système de détection de position (1000) présente un dispositif de commande (1101) qui est connecté à tous les dispositifs de détection de position (100a, 100b, 100c) et qui est réalisé pour recevoir de chaque module capteur (101a, 101b, 101c) un signal de position et pour déterminer une position de maintien de l'aimant (103).

12. Système de détection de position (1000) selon la revendication 11, dans lequel le dispositif de commande (1101) est réalisé pour séparer, sur base de la position de maintien détectée de l'aimant (103), les dispositifs de détection de position éloignés de cette position de maintien (100b, 100c) de manière sélective de la ligne d'énergie commune (803).

13. Système de détection de position (1000) selon la revendication 12, dans lequel le dispositif de commande (1101) est réalisé pour détecter, au moyen de l'évolution de signal d'un module capteur (101b) d'un dispositif de détection de position (101b), la direction de déplacement (1104, 1105) de l'aimant (103b) et pour séparer, sur base de la direction de déplacement (1104, 1105), les dispositifs de détection de position éloignés de cette position de maintien (100a, 100c), à l'exception du dispositif de détection de position (100a) disposé de manière directement adjacente dans la direction de déplacement (1104, 1105), de manière sélective de la ligne d'énergie commune (803).

14. Cylindre (1002a, 1002b, 1002c) avec un système de détection de position (1000) selon l'une des revendications 9 à 13, dans lequel le cylindre (1002a, 1002b, 1002c) présente un piston mobile, et l'aimant est disposé sur le piston, et dans lequel le système de détection de position (1000) est disposé sur le cylindre (1002a, 1002b, 1002c) dans la direction de déplacement du piston.

15. Procédé de détection d'une position d'un aimant (103), dans lequel le procédé présente les étapes suivantes consistant à:
prévoir un système de détection de position (1000) avec au moins deux dispositifs de détection de position (100a, 100b) disposés sur un support commun (1001) selon l'une des revendications 1 à 8 et disposer le système de détection de position (1000) sur un cylindre (1002a, 1002b, 1002c) dans la direction de déplacement de l'aimant (103),
prévoir une bobine (105) et générer une tension induite au moyen d'un déplacement de l'aimant (103) dans la bobine (105) et soumettre la bobine (105) à un courant pour générer un champ magnétique qui est orienté de manière opposée au champ magnétique causé par l'aimant,
générer et mettre à disposition la tension induite dans la bobine (105) pour le module de capteur (101), et
sortir un signal de sortie de capteur (102) du module capteur (101), où le signal de sortie de capteur (102) est fonction de la position de l'aimant (103).
